# EUROPÄISCHE PATENTSCHRIFT

(11) **EP 3 431 280 B1**
(45) Veröffentlichungstag und Bekanntmachung des Hinweises auf die Patenterteilung: **29.09.2021**
(21) Anmeldenummer: 18184198.2
(22) Anmeldetag: 18.07.2018
(51) Int. Cl.: B32B 5/18, B32B 15/08, B32B 15/20, B32B 27/08, B32B 27/36, B32B 27/40, B62D 21/00, B62D 29/00, B62D 33/04

(54) **KOFFERAUFBAU FÜR EIN NUTZFAHRZEUG**
LUGGAGE STRUCTURE FOR A COMMERCIAL VEHICLE
CONSTRUCTION DE COFFRE POUR UN VÉHICULE UTILITAIRE

(30) Priorität: 21.07.2017 DE 102017116564
(43) Veröffentlichungstag der Anmeldung: 23.01.2019
(73) Patentinhaber: Schmitz Cargobull AG, 48341 Altenberge (DE)
(72) Erfinder: Schoepker, Guido, 13467 Berlin (DE)
(74) Vertreter: Cohausz & Florack

(56) Entgegenhaltungen:
- EP-A1- 2 703 153
- WO-A1-2015/082625
- WO-A2-2005/019009

## Beschreibung

Die Erfindung betrifft einen Kofferaufbau für ein Nutzfahrzeug. Der Kofferaufbau weist dabei wenigstens ein Flächenelement mit wenigstens einem Paneel auf, welches im Querschnitt betrachtet einen in Bezug auf eine mittig angeordnete, aus einem geschäumten Kunststoff gebildete Kernlage symmetrischen Aufbau besitzt, bei dem auf zwei gegenüberliegenden Seiten der Kernlage jeweils eine aus mehr als einer Schicht gebildete und mit der Kernlage stoffschlüssig verbundene Zwischenlage und auf der von der Kernlage abgewandten Seite der jeweiligen Zwischenlage jeweils eine mit der Zwischenlage stoffschlüssig verbundene, formsteife Strukturlage liegt.

Bei den Nutzfahrzeugen der hier in Rede stehenden Art handelt es sich typischerweise um Lastkraftwagen, Anhänger für Lastkraftwagen oder Sattelauflieger, die mit einer Zugmaschine einen Sattelzug bilden.

Im Speziellen handelt es sich bei den Nutzfahrzeugen, für die die erfindungsgemäßen Kofferaufbauten bestimmt sind, um so genannte "Kleinlastwagen" in der Gewichtsklasse 2,8 - 7,5 Tonnen, insbesondere 2,8 - 6 Tonnen, die im städtischen oder regionalen Lieferverkehr eingesetzt werden. Der Kofferaufbau dient hierbei als Schutz des Transportguts vor Witterungseinflüssen, insbesondere Feuchtigkeit und Staub, sowie vor Beschädigung oder Diebstahl. Darüber hinaus kann der Kofferaufbau die zu transportierende Ware gegen Temperatureinflüsse schützen und beispielsweise Tiefkühlware gegenüber der Umgebung thermisch isolieren.

Die Basis für mit Kofferaufbauten bestückte Kleinlastwagen und desgleichen bilden typischerweise von Nutzfahrzeugherstellern in Serie gefertigte Fahrgestelle. Auf deren Chassis werden üblicherweise in handwerklicher Fertigung von in der Regel lokalen Karosseriebaubetrieben die Kofferaufbauten montiert.

Typischerweise bestehen die Seitenwände und das Dach von Kofferaufbauten aus Paneelen, die nach Art eines Sandwichs ausgebildet sind und eine innere Kernlage, welche die erforderlich thermische Isolierung gewährleistet, und auf beiden Seiten der Kernlage jeweils eine Außenlage aufweisen, die die erforderliche Formsteifigkeit und Dichtigkeit des Paneels gewährleistet. Die Paneele können in Rahmen oder desgleichen gehalten sein, die nach Art eines Skeletts die Grundstruktur des Kofferaufbaus bilden. Dabei können die Wand-oder Dachpaneele als ein großes Flächenelement ausgebildet sein, welches jeweils alleine die betreffende Seitenwand oder das Dach des Aufbaus darstellt, oder es können zwei oder mehr Paneele zu einem Flächenelement zusammengesetzt werden. Dabei kann die Verbindung der Paneele untereinander über die jeweils vorgesehene Rahmenkonstruktion erfolgen. Alternativ können die Paneele auch über in sie integrierte Verbindungselemente mit weiteren Paneelen zu großflächigen Wand- oder Dachelementen des jeweiligen Kofferaufbaus zusammengesetzt sein.

Es ist bereits versucht worden, an Stelle der üblicherweise verwendeten Blech-Außenlagen bei Paneelen der hier betrachteten Art beispielsweise glasfaserverstärkte Kunststoffe für die Außenlage zu verwenden, um das Gewicht der Paneele zu verringern und ihre Formsteifigkeit zu erhöhen.

Ein Beispiel für ein Isolierpaneel, das als mehrlagiger Verbund ausgebildet und speziell zur Verwendung in isolierten Nutzfahrzeuganhängern, Containern oder sonstigen thermisch isolierten Abteilen bestimmt ist, ist in der EP 1 667 890 B1 beschrieben. Dieses bekannte Isolierpaneel umfasst mindestens zwei im Wesentlichen gasundurchlässige Deckplatten. Eine dieser Deckplatten ist im Gebrauch dem jeweils von dem Isolierpaneel gegenüber der Umgebung abzuschirmenden Raum zugeordnet und als formsteife Laminatplatte ausgebildet. Hierzu weist sie eine gasundurchlässige Barriereschicht, die beispielsweise durch eine dünne Aluminium- oder eine PET-Folie gebildet ist, und wenigstens eine coplanar zur Barriereschicht ausgerichtete Strukturpolymerharzschicht auf, die mit der Barriereschicht verbunden ist. Bei den für die Praxis vorgesehenen Ausführungen des bekannten Isolierpaneels sind jeweils zwei faserverstärkte Strukturpolymerharzschichten vorgesehen, zwischen denen die Barriereschicht angeordnet ist. Die Strukturpolymerharzschichten und die Barriereschicht sind stoffschlüssig zu einem festen Laminat miteinander verbunden. Die im Gebrauch der freien Umgebung zugeordnete andere Decklage des bekannten Isolierpaneels ist dagegen bei seinen für die Praxis vorgesehenen Ausführungen einlagig aus einem gasundurchlässigen dickeren Metallblech hergestellt, wie beispielsweise einem dickeren Aluminium- oder Stahlblech. Zwischen den Decklagen ist bei dem bekannten Isolierpaneel, wie üblich, eine isolierende Kernlage angeordnet, die aus einem geschäumten Kunststoff besteht. Um eine dauerhafte Anbindung der Kernlage an die äußeren Decklagen zu gewährleisten, stellen bei der als Laminatdeckplatte ausgebildeten Decklage die Fasern der der Kernlage zugeordneten faserverstärkten Strukturpolymerharzschicht eine Bindungsoberfläche für den Schaum der Kernlage bereit. Indem nach dem Anschäumen der Kernlage die Fasern der Strukturpolymerharzschicht in die Kernlage greifen, soll eine intensive formschlüssige Anbindung erreicht werden, die trotz ihrer schlechten Verklebbarkeit eine dauerhafte Verbindung zwischen dem Schaum der isolierenden Kernlage und der zugeordneten Strukturpolymerharzschicht der Decklage gewährleisten soll.

Aus der EP 0 940 249 B1 ist des Weiteren ein thermisch isolierendes Strukturlaminat bekannt, das einen Kern aus einem Polyurethan- oder Polyisocyanuratschaum mit zwei Hauptoberflächen umfasst, wobei an wenigstens einer der Hauptoberflächen des Schaumkerns ein Deckmaterial angebracht ist. Dieses Deckmaterial ist als Schichtverbund aufgebaut und umfasst eine Metallfolienschicht und eine an der Metallfolienschicht liegende Polymerschicht. Das Polymer der Polymerschicht enthält eine Polyestergruppe als Haupt- oder wiederkehrende Einheiten. Alternativ kann das Polymer der Polymerschicht auch eine Polymermischung sein, die ein polyestergruppenhaltiges Polymer enthält. Die zähe Polymerschicht des Schichtverbunds ist an der äußeren Oberfläche der Verbundbedeckung angeordnet ist. In einer Ausführung weist das so gebildete Paneel einen im Querschnitt in Bezug auf die Schaumkernlage mehrschichtigen unsymmetrischen Aufbau auf. Bei diesem Aufbau liegt an der einen Seite der Schaumkernlage eine Aluminiumfolie, an der von der Schaumkernlage abgewandten Seite der Aluminiumfolie eine faserhaltige Lage, die beispielsweise durch ein Kraftpapier gebildet ist, und an der von der Aluminiumfolie abgewandten Seite der faserhaltigen Lage eine zähe Polymerschicht. Dagegen liegt an der anderen Seite der Schaumkernlage eine weitere zähe Polymerschicht, an der von der Schaumkernlage abgewandten Seite der Polymerschicht eine weitere faserhaltige, beispielsweise ebenfalls aus Kraftpapier gebildete Lage und an der von der Polymerschicht abgewandten Seite der faserhaltigen Lage eine weitere Aluminiumfolie.

Vor dem Hintergrund des voranstehend erläuterten Standes der Technik hat sich die Aufgabe ergeben, einen Kofferaufbau zu schaffen, der sich nicht nur besonders einfach herstellen lässt, sondern auch eine optimale Formstabilität seiner Flächenelemente bei gleichzeitig minimiertem Gewicht und guten Gebrauchseigenschaften besitzt.

Aus der WO 2015/082625 A1 ist zudem eine Seitenwand und ein Dach eines Kofferaufbaus eines Nutzfahrzeugs mit einer Kernlage und wenigstens einer Außenhaut bekannt. Dabei wird die Außenhaut aus mehreren an benachbarten Seiten miteinander verbundenen Paneelen gebildet. Die Paneele umfassen eine Strukturlage mit wenigstens einer nichtmetallischen Schicht und eine Decklage mit wenigstens einer metallischen Schicht. Dabei erstrecken sich die Decklagen der Paneele an den miteinander verbundenen Seiten weiter in Richtung der angrenzenden Paneele als die Strukturlagen der Paneele.

Die Erfindung hat diese Aufgabe durch einen Kofferaufbau mit den in Anspruch 1 angegebenen Merkmalen gelöst.

Vorteilhafte Ausgestaltungen der Erfindung sind in den abhängigen Ansprüchen angegeben und werden nachfolgend wie der allgemeine Erfindungsgedanke im Einzelnen erläutert.

Ein erfindungsgemäßer Kofferaufbau für ein Nutzfahrzeug weist demnach wenigstens ein Flächenelement mit wenigstens einem Paneel auf, welches im Querschnitt betrachtet einen Aufbau besitzt, der in Bezug auf eine Kernlage, die mittig im Paneel angeordnet ist und aus einem geschäumten Kunststoff gebildet ist, symmetrisch ist, indem auf zwei gegenüberliegenden Seiten der Kernlage jeweils eine aus mehr als einer Schicht gebildete und mit der Kernlage stoffschlüssig verbundene Zwischenlage und auf der von der Kernlage abgewandten Seite der jeweiligen Zwischenlage jeweils eine mit der Zwischenlage stoffschlüssig verbundene, formsteife Strukturlage liegt.

Erfindungsgemäß besitzen nun die Zwischenlagen eine Dicke, die jeweils kleiner als die Dicke der Strukturlage ist. Gleichzeitig umfassen die Zwischenlagen jeweils zwei Anschlussschichten, die aus einem Polymerwerkstoff bestehen und von denen die eine Anschlussschicht stoffschlüssig an die Strukturlage und die andere Anschlussschicht stoffschlüssig an die Kernlage angeschlossen ist. Dabei ist zwischen den Anschlussschichten der Zwischenlage eine gasundurchlässige Sperrschicht der Zwischenlage angeordnet, die mit den an ihr anliegenden Anschlussschichten stoffschlüssig verbunden ist und eine Dicke aufweist, die höchstens gleich der Dicke der Anschlussschichten ist. Eine besonders sichere Wirkung der Sperrschicht ergibt sich dabei dann, wenn die Sperrschicht aus einem Metallwerkstoff besteht.

Ein erfindungsgemäß gestaltetes Paneel kann so aufgebaut sein, dass es einen hinsichtlich der Funktion der einzelnen Lagen symmetrischen Aufbau besitzt (Strukturlage - Zwischenlage - Kernlage - Zwischenlage - Strukturlage). Dies hat den Vorteil, dass bei einem derart ausgestalteten Paneel keine spezielle Zuordnung seiner einzelnen Schichten zum Laderaum oder zur Umgebung vorhanden ist, durch die eine bestimmte Ausrichtung des Paneels bei der Montage des Kofferaufbaus erforderlich wäre. Folglich besteht in diesem Fall keine Gefahr mehr, dass es bei der Montage durch eine falsche Ausrichtung der Paneele zu Fehlern kommt. Dies kann insbesondere bei Kofferaufbauten von Bedeutung sein, die als Bausatz geliefert und dezentral vor Ort beim Kunden oder in kleineren Werkstätten montiert werden. Durch die erfindungsgemäße Gestaltung des Paneels ist dort der Montageaufwand bereits deutlich vermindert.

Bei vielen Anwendungsfällen kann es jedoch erforderlich sein, einzelne der Lagen eines erfindungsgemäß ausgebildeten Paneels besonders auszubilden. So kann es beispielsweise erforderlich sein, eine der Strukturlagen so auszurüsten, dass sie eine höhere Steifigkeit oder Belastbarkeit als die andere Strukturlage besitzt. Dies kann sich ergeben, wenn die beispielsweise dem Laderaum zugeordnete Strukturlage des Paneels im Gebrauch besonderen Belastungen ausgesetzt ist. Solche Belastungen können auftreten, wenn ein mit einem erfindungsgemäßen Kofferaufbau ausgerüstetes Nutzfahrzeug im lokalen Lieferverkehr eingesetzt wird, bei dem es zu häufig sich wiederholenden Ladevorgängen kommt.

Die bei einem erfindungsgemäßen Kofferaufbau vorgesehenen Paneele weisen aufgrund ihres erfindungsgemäß vorgesehenen Schichtaufbaus bei optimaler thermischer Isolierungswirkung und Formsteifigkeit ein minimiertes Gewicht auf. So hat sich überraschend gezeigt, dass es durch den erfindungsgemäßen Schichtaufbau der Zwischenlagen möglich ist, die erforderliche Dampfsperre zwischen den die Formsteifigkeit gewährleistenden Strukturlagen und der thermisch isolierenden Kernlage in einer extrem dünnen Zwischenlage zu realisieren, indem die empfindliche und besonders dünne Sperrschicht zwischen zwei Anschlussschichten angeordnet ist, die aufgrund ihrer Materialeigenschaften, insbesondere der ihnen innewohnenden Flexibilität, die dünne Sperrschicht ausreichend schützen und gleichzeitig die Anbindung der Zwischenschicht an die Kernlage und die Strukturlage ermöglichen.

Dabei kann die Dicke der Zwischenlage auf höchstens ein Dreißigstel der Dicke der Strukturlage beschränkt sein, insbesondere weniger als ein Dreißigstel der Dicke der Strukturlage betragen.

Durch die Erfindung gelingt es folglich, einen Kofferaufbau bereitzustellen, bei dem die Formsteifigkeit seiner Flächenelemente und die Dichtigkeit gegen den Durchtritt von Dampf in die Kernlage unabhängig von der Dicke der Kernlage gewährleistet ist, so dass die Dicke der Kernlage entsprechend den jeweiligen Anforderungen an die thermische Isolierungswirkung variiert werden kann. Soll der Kofferaufbau vorranging das in dem von ihm umgebenen Laderaum verstaute Transportgut gegenüber der Umgebung abschirmen, ohne dass dabei auf eine besondere thermische Isolierung Wert gelegt wird, kann dementsprechend die Dicke der Kernlage minimiert werden. Soll dagegen eine hohe thermische Isolierung erzielt werden, kann die Dicke der Kernlage entsprechend erhöht werden.

Hierbei hat es sich gezeigt, dass die Dicke der Sperrschicht der Zwischenlage so weit reduziert werden kann, dass die Anschlussschichten der Zwischenlagen jeweils eine Dicke besitzen können, die mindestens doppelt so groß ist wie die Dicke der Sperrschicht der Zwischenlagen. So kann die Dicke der Anschlussschichten der Zwischenlagen jeweils 13 - 17 µm betragen, wogegen die Dicke der Sperrschicht der Zwischenlage typischerweise 5-10 µm, insbesondere 6 - 8 µm, beträgt. Die Gesamtdicke der Zwischenlage kann dementsprechend zwischen 31 - 44 µm betragen.

Die Dicke der Kernlage eines erfindungsgemäß beschaffenen Paneels kann demgegenüber über einen Bereich von typischerweise 15 - 85 mm variiert werden, wobei selbstverständlich auch größere Dicken möglich sind, wenn sich dies aufgrund der Anforderungen an die thermische Isolierungswirkung als erforderlich herausstellt.

Die Dicke der Strukturlage liegt demgegenüber typischerweise bei 1,3 - 1,5 mm.

Die Strukturlage kann aus einem faserverstärkten Kunststoff bestehen. Als Fasern zur Verstärkung des Kunststoffs kommen hier insbesondere Glasfasern in Betracht. Es könnten jedoch alternativ auch andere Fasern, wie beispielsweise Kunststofffasern, Basaltfasern, Kohlenstofffasern oder Graphitfasern als Verstärkung verwendet werden. Für die Kunststoffmatrix, in die die betreffenden Fasern der Strukturlage eingelagert sind, kann ein Duroplastwerkstoff, ein ungesättigtes Polyesterharz und desgleichen oder auch ein thermoplastischer Kunststoff Verwendung finden. Als geeignet hat sich hier beispielsweise auch Polyamid erwiesen.

Beispiele für das Material, aus dem die erfindungsgemäß vorgesehenen Anschlussschichten der Zwischenlagen bestehen können, sind Polyethylenterephthalat ("PET"), ungesättigte Polyesterharze ("UP") oder andere Materialien, die sich für einen Anschluss der Zwischenlage an die jeweils angrenzenden Lagen (Strukturlage, Kernlage) eignen.

Die Sperrschicht kann als dünne Metallschicht ausgeführt sein. Eine kostengünstige und gleichzeitig wirkungsvolle Möglichkeit ist hier eine Schicht, die aus einem Aluminiumwerkstoff besteht. Die Schicht kann in Form einer Folie bereitgestellt und mit den Anschlussschichten der Zwischenlage verbunden werden. Es ist jedoch auch denkbar, die Sperrschicht auf eine der Anschlussschichten durch ein geeignetes Auftragverfahren, beispielsweise Bedampfen oder Spritzen, aufzubringen und anschließend die zweite Anschlussschicht der jeweiligen Zwischenschicht mit der Sperrschicht der Zwischenlage zu verbinden. Im Fall, dass ein metallhaltiger Kunststoff für die Sperrschicht der Zwischenlage eingesetzt werden soll, hat es sich als vorteilhaft herausgestellt, wenn die Metallpartikel der Kunststoffmatrix feindispers verteilt vorliegen, wobei sich eine optimale Wirkung einstellt, wenn die Metallpartikel als flache Plättchen vorliegen.

Eine besonders gute thermische Isolierwirkung der Kernlage kann dadurch erreicht werden, wenn die Kernlage aus einem Polyurethanschaum besteht. Derartige Schäume lassen sich besonders einfach an die jeweilige Zwischenlage anschäumen. Im Zuge des Aushärtens des so angeschäumten Kunststoffs an der Zwischenlage kommt es dann zum gewünschten Stoffschluss zwischen der Zwischenlage und der Kernlage.

Um die Kernlage oder die Strukturlage dauerhaft fest mit der Zwischenlage zu verbinden, kann es je nach Materialwahl vorteilhaft sein, wenn die Zwischenlage an ihrer an die Kernlage grenzenden Seite eine innere Haftvermittlerschicht aufweist, die für eine stoffschlüssige Anbindung der Kernlage an die Zwischenlage sorgt. Alternativ oder zusätzlich kann die Zwischenlage auch an ihrer an die Strukturlage grenzenden Seite eine äußere Haftvermittlerschicht besitzen, die für die stoffschlüssige Anbindung der Strukturlage an die Kernlage sorgt.

Die Erfindung wird nachfolgend anhand einer ein Ausführungsbeispiel darstellenden Zeichnung näher erläutert. In der Zeichnung zeigt
- Fig. 1: ein Nutzfahrzeug mit einem erfindungsgemäßen Kofferaufbau in einer perspektivischen Ansicht von hinten und
- Fig. 2: ein Paneel einer Seitenwand des in Fig. 1 dargestellten Kofferaufbaus in einer Schnittansicht quer zum Paneel.

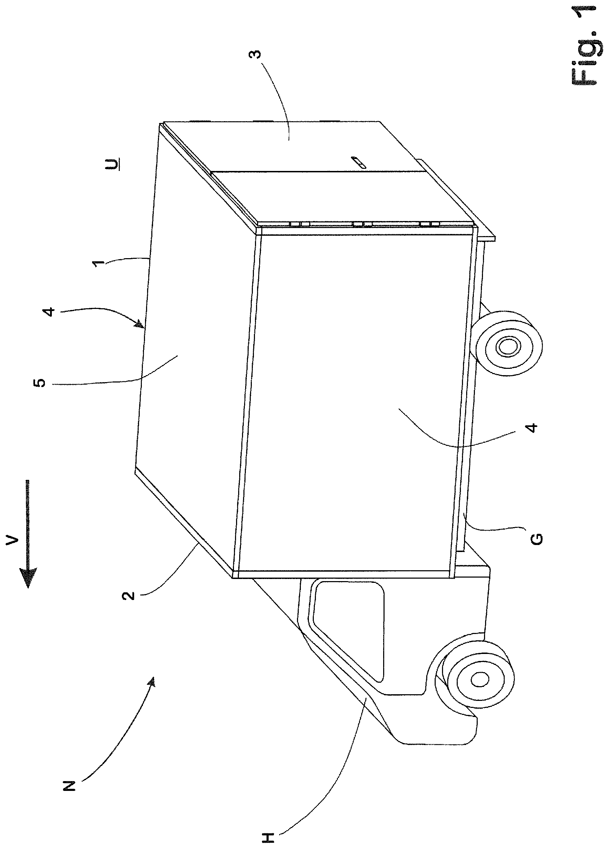

In der Fig. 1 ist ein Nutzfahrzeug N in Form eines Kleintransporters dargestellt, der ein Fahrgestell G aufweist, in dessen in normaler Vorwärtsfahrtrichtung V vorderen Ende ein Führerhaus H mit darunter angeordnetem Antriebsmotor positioniert sind.

Auf dem übrigen Teil seines Fahrgestells G trägt das Nutzfahrzeug N einen geschlossenen Kofferaufbau 1, der mit einer Stirnwand 2, einer Rückwand 3, zwei Seitenwänden 4 und einem Dach 5 einen Laderaum zur Aufnahme von temperaturempfindlichem Transportgut gegenüber der freien Umgebung U des Kofferaufbaus 1 abgrenzt.

Jede Seitenwand 4 und das Dach 5 des Kofferaufbaus 1 sind als Flächenelemente ausgebildet, die jeweils mindestens ein mehrschichtig aufgebautes Paneel 6 umfassen. Die Paneele 6 sind in an sich bekannter Weise in einem hier der Übersichtlichkeit halber nicht dargestellten Rahmen gehalten, der nach Art eines Skeletts die Grundstruktur des Kofferaufbaus 1 bildet. Der Aufbau und die Montage von Kofferaufbauten der hier dargestellten Art sind im Einzelnen in der Europäischen Patentanmeldung 16 157 644.2 vom 26. Februar 2016 dargestellt, deren Inhalt hiermit in die vorliegende Anmeldung durch Bezugnahme einbezogen wird.

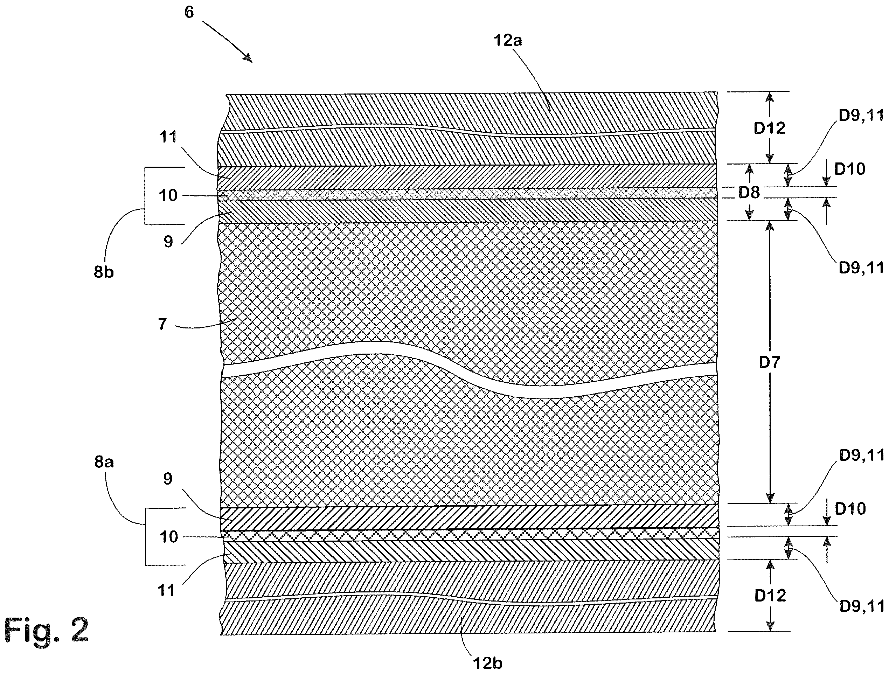

Wie in Fig. 2 gezeigt, weisen die Paneele 6 des Dachs 5 und der Seitenwände 4 einen Aufbau auf, der in Bezug auf eine in der Mitte ihres Querschnitts (Fig. 2) angeordnete Kernlage 7 symmetrisch, nämlich spiegelsymmetrisch, ist.

An den beiden Außenseiten der Kernlage 7 liegt jeweils eine Zwischenlage 8a,8b. Die Zwischenlagen 8a,8b sind jeweils dreischichtig aufgebaut. Eine innere erste Anschlussschicht 9 der Zwischenlagen 8a,8b ist stoffschlüssig an die zugeordnete Seite der Kernlage 7 angeschlossen. An der ersten Anschlussschicht 9 liegt eine Sperrschicht 10 der jeweiligen Zwischenlage 8a,8b, die stoffschlüssig mit der inneren ersten Anschlussschicht 9 verbunden ist. An der von der Kernlage 7 abgewandten Seite der Sperrschicht 10 der jeweiligen Zwischenlage 8a,8b liegt als dritte Schicht der jeweiligen Zwischenlage 8a,8b eine ebenfalls stoffschlüssig angebundene äußere zweite Anschlussschicht 11 an.

An der Außenseite der äußeren Anschlussschicht 11 der jeweiligen Zwischenlage 8a,8b liegt schließlich jeweils eine Strukturlage 12a,12b an. Die aus einem glasfaserverstärkten Kunststoff bestehende Strukturlagen 12a,12b verleihen dem Paneel 6 die notwendige Formsteifigkeit. Sie weisen eine Dicke D12 von 1,3 - 1,5 mm auf.

Die Kernlage 7 besteht dagegen aus einem für diese Zwecke bewährten geschäumten Kunststoff mit einer geschlossenporigen Struktur und optimierten thermischen Isolierungseigenschaften. So handelt es sich beim Kunststoffschaum der Kernlage 7 beispielsweise um geschäumtes Polyurethan. Die Kernlage 7 hat dabei eine Dicke D7 von 10 mm bis 85 mm.

Die Anschlussschichten 9,11 der Zwischenlagen 8a,8b bestehen aus Polyethylenterephthalat ("PET") und haben beim hier vorgestellten Beispiel eine Dicke D9,11 von jeweils 15 µm. Das Material der Anschlussschichten 9,11 ist dabei so gewählt, dass die Anschlussschichten 9,11 mittels eines geeigneten Laminierverfahrens mit der jeweils angrenzenden Lage (Anschlussschicht 9 - Kernlage 7; Anschlussschicht 11 - jeweilige Strukturlage12a,12b) und der zwischen den Anschlussschichten 9,11 jeweils liegenden Sperrschicht 10 der jeweiligen Zwischenlage 8a,8b verklebt werden können und so eine dauerhafte stoffschlüssige Verbindung gewährleisten.

Die Sperrschicht 10 der Zwischenlagen 8a,8b besteht aus einer Aluminiumfolie mit einer Dicke D10 von jeweils 7 µm. Sie verhindert als Dampfsperre den Durchtritt von Feuchtigkeit aus der äußeren Umgebung U des Nutzfahrzeugs N oder des von dem Kofferaufbau 1 umgrenzten Laderaums in die Kernlage 7.

Die Anbindung der Strukturlagen 12a, 12b an die an ihnen jeweils anliegende Zwischenlage 8a,8b kann nach Art eines Laminiervorgangs im Prozess der Herstellung der Strukturlagen 12a,12b erfolgen, indem auf die jeweilige Anschlussschicht 9 der zuvor jeweils bereitgestellten Zwischenlage 8a,8b die Komponenten der Strukturlagen 12a,12b aufgebraucht werden, so dass es zur stoffschlüssigen Anbindung des flüssig aufgetragenen Matrixkunststoffs der Strukturlage an die jeweilige Anschlussschicht 9 der Zwischenlagen 8a,8b kommt.

Um die Anbindung der Anschlussschichten 9,11 der jeweiligen Zwischenlage 8a,8b an die jeweils zugeordnete Seite der Kernlage 7 oder zugeordneten Strukturlage 12a,12b zu gewährleisten, können die betreffenden jeweils aneinander anliegenden Seiten der Anschlussschichten 9,11 und der Kernlage 7 sowie der Strukturlage 12a,12b vor dem Verkleben mit einer Haftvermittlerschicht belegt werden. Genauso kann erforderlichenfalls zwischen den Anschlussschichten 9,11 und der Sperrschicht 10 der jeweiligen Zwischenlage 8a,8b jeweils eine Haftvermittlerschicht vorgesehen sein, um eine dauerhaft sichere Anbindung der Sperrschicht 10 an die Anschlussschichten 9,11 zu ermöglichen. Die Haftvermittlerschichten können als Lackschichten aufgebracht werden.

Die aus den Strukturlagen 12a,12b und der mit ihnen jeweils verbundenen Zwischenlage 8a,8b gebildete Verbunde werden anschließend in geeignetem Abstand in eine Form gelegt, in der anschließend zur Erzeugung der Kernlage 7 der zwischen den Verbunden vorhandene Raum mit dem Schaum der Kernlage 7 gefüllt wird.

Unabhängig vom hier beschriebenen Ausführungsbeispiel werden in der Praxis für die jeweilige Strukturlage 12a,12b Schichtdicken D12 von typischerweise 1,3 - 1,5 mm vorgesehen.

Die Dicke D12 der Strukturlagen 12a,12b ist folglich etwa um das 35- bis 40-fache größer als die der Summe der Dicken D9,11 der Anschlussschichten 9,11 und der Dicke D10 der Sperrschicht 10 der jeweiligen Zwischenlage 8a,8b entsprechende Dicke D8 der Zwischenlagen 8a,8b.

Bei den Fasern der Strukturlagen 12a,12b handelt es sich beispielsweise um Glasfasern. Es könnten jedoch alternativ auch andere Fasern, wie beispielsweise Kunststofffasern, Basaltfasern, Kohlenstofffasern oder Graphitfasern als Verstärkung verwendet werden. Dabei kann in eine oder beide der Strukturlagen 12a, 12b zur weiteren Verbesserung ihrer Formstabilität und Beulsteifigkeit mindestens eine zusätzliche Lage an verstärkenden Fasern beispielsweise als Roving eingelegt sein. Als Kunststoff für die Matrix, in der die Fasern eingebettet sind, hat sich beispielsweise ein Polypropylen-Werkstoff bewährt.

Auf die freie Außenseite einer oder beider Strukturlagen 12a,12b kann auch noch zur Verbesserung der optischen Erscheinung oder zum Schutz vor Witterungseinflüssen eine Beschichtung beispielsweise in Form eines Gelcoatings (Polyesterlack) aufgetragen werden.

### BEZUGSZEICHEN

- 1: Kofferaufbau
- 2: Stirnwand des Kofferaufbaus 1
- 3: Rückwand des Kofferaufbaus 1
- 4: Seitenwände des Kofferaufbaus 1
- 5: Dach des Kofferaufbaus 1
- 6: Paneele
- 7: Kernlage der Paneele 6
- 8a,8b: Zwischenlage der Paneele 6
- 9: erste Anschlussschicht der Zwischenlagen 8a,8b
- 10: Sperrschicht der Zwischenlagen 8a,8b
- 11: zweite Anschlussschicht der Zwischenlagen 8a,8b
- 12a,12b: Strukturlagen des Paneels 6

- D7: Dicke der Kernlage 7
- D8: Dicke der Zwischenlagen 8a,8b
- D10: Dicke der Sperrschicht 10
- D9,11: Dicke der Anschlussschichten 9,11
- D12: Dicke der Strukturlagen 12a,12b
- G: Fahrgestell des Nutzfahrzeugs N
- H: Führerhaus des Nutzfahrzeugs N
- N: Nutzfahrzeug
- U: äußere freie Umgebung des Kofferaufbaus 1
- V: Vorwärtsfahrtrichtung des Nutzfahrzeugs N

## Patentansprüche

1. Kofferaufbau für ein Nutzfahrzeug, wobei der Kofferaufbau (1) wenigstens ein Flächenelement mit wenigstens einem Paneel (6) aufweist, welches im Querschnitt betrachtet einen in Bezug auf eine mittig angeordnete, aus einem geschäumten Kunststoff gebildete Kernlage (7) symmetrischen Aufbau besitzt, bei dem auf zwei gegenüberliegenden Seiten der Kernlage (7) jeweils eine aus mehr als einer Schicht gebildete und mit der Kernlage (7) stoffschlüssig verbundene Zwischenlage (8a,8b) und auf der von der Kernlage (7) abgewandten Seite der jeweiligen Zwischenlage (8a,8b) jeweils eine mit der Zwischenlage (8a,8b) stoffschlüssig verbundene, formsteife Strukturlage (12a, 12b) liegt, **dadurch gekennzeichnet, dass** die Zwischenlagen (8a,8b) eine Dicke besitzen, die jeweils kleiner als die Dicke (D12) der Strukturlagen (12a,12b) ist, dass die Zwischenlagen (8a,8b) jeweils zwei Anschlussschichten (9,11) umfassen, die aus einem Polymerwerkstoff bestehen und von denen die eine Anschlussschicht (11) stoffschlüssig an die Strukturlage (12a,12b) und die andere Anschlussschicht (9) stoffschlüssig an die Kernlage (7) angeschlossen ist, und **dass** zwischen den Anschlussschichten (9,11) der Zwischenlage (8a,8b) eine gasundurchlässige Sperrschicht (10) der Zwischenlage (8a,8b) angeordnet ist, die mit den an ihr anliegenden Anschlussschichten (9,11) stoffschlüssig verbunden ist und eine Dicke (D10) aufweist, die höchstens gleich der Dicke (D9,11) der Anschlussschichten (9,11) ist.

2. Kofferaufbau nach Anspruch 1, **dadurch gekennzeichnet, dass** die Anschlussschichten (9,11) der Zwischenlagen (8a,8b) jeweils eine Dicke (D9,11) besitzen, die mindestens doppelt so groß ist wie die Dicke (D10) der Sperrschicht (10) der Zwischenlagen (8a,8b).

3. Kofferaufbau nach einem der voranstehenden Ansprüche, **dadurch gekennzeichnet, dass** die Dicke (D8) der Zwischenlage (8a,8b) weniger als ein Dreißigstel der Dicke der Strukturlage (12a,12b) beträgt.

4. Kofferaufbau nach einem der voranstehenden Ansprüche, **dadurch gekennzeichnet, dass** die Dicke (D9,11) der Anschlussschichten (9,11) der Zwischenlagen (8a,8b) jeweils 13 - 17 µm beträgt.

5. Kofferaufbau nach einem der voranstehenden Ansprüche, **dadurch gekennzeichnet, dass** die Dicke (D10) der Sperrschicht (10) der Zwischenlagen (8a,8b) jeweils 5 - 10 µm beträgt.

6. Kofferaufbau nach einem der voranstehenden Ansprüche, **dadurch gekennzeichnet, dass** die Dicke (D7) der Kernlage (7) 15 - 85 mm beträgt.

7. Kofferaufbau nach einem der voranstehenden Ansprüche, **dadurch gekennzeichnet, dass** die Dicke (D12) der Strukturlagen (12a,12b) jeweils 1,1 - 1,7 mm beträgt.

8. Kofferaufbau nach einem der voranstehenden Ansprüche, **dadurch gekennzeichnet, dass** die Strukturlagen (12a,12b) aus einem faserverstärkten Kunststoff bestehen.

9. Kofferaufbau nach einem der voranstehenden Ansprüche, **dadurch gekennzeichnet, dass** die Anschlussschichten (9,11) der Zwischenlagen (8a,8b) jeweils aus Polyethylenterephthalat oder einem ungesättigten Polyesterharz bestehen.

10. Kofferaufbau nach einem der voranstehenden Ansprüche, **dadurch gekennzeichnet, dass** die Sperrschicht aus einem Metallwerkstoff besteht.

11. Kofferaufbau nach einem der voranstehenden Ansprüche, **dadurch gekennzeichnet, dass** die Kernlage (7) aus einem Polyurethanschaum besteht.

12. Kofferaufbau nach einem der voranstehenden Ansprüche, **dadurch gekennzeichnet, dass** die Sperrschicht (10) der Zwischenlagen (8a,8b) jeweils aus einem Aluminiumwerkstoff besteht.

## Claims

1. Box body for a commercial vehicle, wherein the box body (1) has at least one surface element having at least one panel (6), which, when viewed in the cross-section, has a structure that is symmetrical in relation to a core layer (7) arranged centrally and formed by a foamed plastic, in which, on two opposing sides of the core layer (7), in each case there is an intermediate layer (8a, 8b) formed by more than one ply and connected in a materially-bonded manner to the core layer (7) and, located on the side of the respective intermediate layer (8a, 8b) facing away from the core layer (7), in each case there is a rigid structure layer (12a, 12b) connected in a materially-bonded manner to the intermediate layer (8a, 8b), **characterised in that** the intermediate layers (8a, 8b) have a thickness that is in each case less than the thickness (D12) of the structure layers (12a, 12b), **in that** the intermediate layers (8a, 8b) each comprise two terminal plies (9, 11) consisting of a polymer material and of which the one terminal ply (11) is connected to the structure layer (12a, 12b) in a materially-bonded manner and the other terminal ply (9) is connected to the core layer (7) in a materially-bonded manner, and **in that** between the terminal plies (9, 11) of the intermediate layer (8a, 8b) is arranged a gas-impermeable barrier ply (10) of the intermediate layer (8a, 8b), which is connected to the terminal plies (9, 11) resting thereon in a materially-bonded manner and has a thickness (D10) which is at most equal to the thickness (D9, 11) of the terminal plies (9, 11).

2. Box body according to claim 1, **characterised in that** the terminal plies (9, 11) of the intermediate layers (8a, 8b) each have a thickness (D9, 11) that is at least double the thickness (D10) of the barrier ply (10) of the intermediate layers (8a, 8b).

3. Box body according to any one of the preceding claims, **characterised in that** the thickness (D8) of the intermediate layer (8a, 8b) is less than a thirtieth of the thickness of the structure layer (12a, 12b).

4. Box body according to any one of the preceding claims, **characterised in that** the thickness (D9, 11) of the terminal plies (9, 11) of the intermediate layers (8a, 8b) is in each case 13-17 µm.

5. Box body according to any one of the preceding claims, **characterised in that** the thickness (D10) of the barrier ply (10) of the intermediate layers (8a, 8b) is in each case 5-10 µm.

6. Box body according to any one of the preceding claims, **characterised in that** the thickness (D7) of the core layer (7) is 15-85 mm.

7. Box body according to any one of the preceding claims, **characterised in that** the thickness (D12) of the structure layers (12a, 12b) is in each case 1.1-1.7 mm.

8. Box body according to any one of the preceding claims, **characterised in that** the structure layers (12a, 12b) consist of a fibre-reinforced plastic.

9. Box body according to any one of the preceding claims, **characterised in that** the terminal plies (9, 11) of the intermediate layers (8a, 8b) each consist of a polyethylene terephthalate or an unsaturated polyester resin.

10. Box body according to any one of the preceding claims, **characterised in that** the barrier ply consists of a metal material.

11. Box body according to any one of the preceding claims, **characterised in that** the core layer (7) consists of a polyurethane foam.

12. Box body according to any one of the preceding claims, **characterised in that** the barrier ply (10) of the intermediate layers (8a, 8b) in each case consists of an aluminium material.

## Revendications

1. Structure de chargement pour un véhicule utilitaire, où la structure (1) présente au moins un élément de surface avec au moins un panneau (6) qui, vu en coupe transversale, présente une structure symétrique par rapport à une couche centrale (7) disposée au centre et formée d'une matière plastique expansée, dans laquelle structure, sur deux côtés opposés de la couche centrale (7), se trouve à chaque fois une couche intermédiaire (8a, 8b) formée de plus d'une couche et liée matériellement à la couche centrale (7), et sur le côté de la couche intermédiaire respective (8a, 8b) opposé à la couche centrale (7), se trouve à chaque fois une couche structurelle de forme rigide (12a, 12b) liée matériellement à la couche intermédiaire (8a, 8b),
**caractérisée**
- **en ce que** les couches intermédiaires (8a, 8b) ont une épaisseur qui est chacune inférieure à l'épaisseur (D12) des couches structurelles (12a, 12b),
- **en ce que** les couches intermédiaires (8a, 8b) comprennent chacune deux couches de liaison (9, 11) qui consistent en un matériau polymère et dont une couche de liaison (11) est liée matériellement à la couche structurelle (12a, 12b) et l'autre couche de liaison (9) est liée matériellement à la couche centrale (7), et
- **en ce qu'**entre les couches de liaison (9, 11) de la couche intermédiaire (8a, 8b) est disposée une couche barrière (10) imperméable aux gaz de la couche intermédiaire (8a, 8b), laquelle couche barrière (10) imperméable aux gaz est liée matériellement aux couches de liaison (9, 11) qui lui sont adjacentes et présente une épaisseur (D10) qui est au plus égale à l'épaisseur (D9, 11) des couches de liaison (9, 11).

2. Structure de chargement selon la revendication 1, **caractérisée en ce que** les couches de liaison (9, 11) des couches intermédiaires (8a, 8b) ont chacune une épaisseur (D9, 11) qui est au moins deux fois plus grande que l'épaisseur (D10) de la couche barrière (10) des couches intermédiaires (8a, 8b).

3. Structure de chargement selon l'une des revendications précédentes, **caractérisée en ce que** l'épaisseur (D8) de la couche intermédiaire (8a, 8b) est inférieure à un trentième de l'épaisseur de la couche structurelle (12a, 12b).

4. Structure de chargement selon l'une des revendications précédentes, **caractérisée en ce que** l'épaisseur (D9, 11) des couches de liaison (9, 11) des couches intermédiaires (8a, 8b) est à chacune de 13 à 17 µm.

5. Structure de chargement selon l'une des revendications précédentes, **caractérisée en ce que** l'épaisseur (D10) de la couche barrière (10) des couches intermédiaires (8a, 8b) est chacune de 5 à 10 µm.

6. Structure de chargement selon l'une des revendications précédentes, **caractérisée en ce que** l'épaisseur (D7) de la couche centrale (7) est de 15 à 85 mm.

7. Structure de chargement selon l'une des revendications précédentes, **caractérisée en ce que** l'épaisseur (D12) des couches structurelles (12a, 12b) est chacune de 1,1 à 1,7 mm.

8. Structure de chargement selon l'une des revendications précédentes, **caractérisée en ce que** les couches structurelles (12a, 12b) sont constituées d'une matière plastique renforcée par des fibres.

9. Structure de chargement selon l'une des revendications précédentes, **caractérisée en ce que** les couches de liaison (9, 11) des couches intermédiaires (8a, 8b) sont chacune constituées de polyéthylène téréphtalate ou d'une résine de polyester insaturé.

10. Structure de chargement selon l'une des revendications précédentes, **caractérisée en ce que** la couche barrière est constituée d'un matériau métallique.

11. Structure de chargement selon l'une des revendications précédentes, **caractérisée en ce que** la couche centrale (7) est constituée d'une mousse de polyuréthane.

12. Structure de chargement selon l'une des revendications précédentes, **caractérisée en ce que** la couche barrière (10) des couches intermédiaires (8a, 8b) est constituée chacune d'un matériau en aluminium.
